# EUROPEAN PATENT SPECIFICATION

(11) **EP 4 630 480 B1**
(45) Date of publication and mention of the grant of the patent: **02.09.2026**
(21) Application number: 23828131.5
(22) Date of filing: 06.12.2023
(51) Int. Cl.: C08J 11/08, C08J 11/14

(54) **PROCESS FOR TREATING A YARN OR A TEXTILE COMPRISING ELASTOMERIC FIBERS IN COMBINATION WITH POLYAMIDE AND/OR POLYESTER SYNTHETIC FIBERS**
VERFAHREN ZUR BEHANDLUNG EINES GARNS ODER EINES TEXTILS, DAS ELASTOMERE FASERN IN KOMBINATION MIT SYNTHETISCHEN POLYAMID- UND/ODER POLYESTERFASERN UMFASST
PROCÉDÉ DE TRAITEMENT D'UN FIL OU D'UN TEXTILE COMPRENANT DES FIBRES ÉLASTOMÈRES EN COMBINAISON AVEC DES FIBRES SYNTHÉTIQUES DE POLYAMIDE ET/OU DE POLYESTER

(30) Priority: 09.12.2022 IT 202200025275
(43) Date of publication of application: 15.10.2025
(73) Proprietor: Aquafil S.p.A., 38062 Arco (IT)
(72) Inventor: DAL MORO, Anacleto, 31030 Semonzo di Borsa del Grappa (TV) (IT); ENDRIGHI, Alessandro, 42123 Reggio Emilia (RE) (IT); CECCHETTO, Michele, 38067 Ledro (TN) (IT); BERTOLLA, Maddalena, 38065 Mori (TN) (IT); MIRRI, Giorgio, 1241 Kamnik (SI); GUERRA, Stefano, 38062 Arco (TN) (IT)
(74) Representative: Bottero, Carlo
(86) International application number: PCT/IB2023/062290
(87) International publication number: WO 2024/121765

(56) References cited:
- JP-A- 2008 031 388
- JP-A- 2011 088 943
- US-A- 5 889 142
- US-A1- 2022 169 822
- GONG CAIHONG ET AL: "Simple process for separation and recycling of nylon 6 and polyurethane components from waste nylon 6/polyurethane debris", vol. 91, no. 1-2, 17 June 2020 (2020-06-17), GB, pages 18 - 27, XP093006676, ISSN: 0040-5175, Retrieved from the Internet <URL:http://journals.sagepub.com/doi/full-xml/10.1177/0040517520931893> DOI: 10.1177/0040517520931893

## Description

### TECHNICAL FIELD OF THE INVENTION

The present invention relates to a process for treating a yarn or a textile comprising elastomeric fibers in combination with polyamide and/or polyester synthetic fibers.

In particular, the present invention relates to an innovative process for the chemical and mechanical recycling of plastics in the form of polyamide or polyester-based fibers and textiles from composites wherein they are present in combination with elastomeric fibers (e.g. Spandex^{®}).

Polyamides (such as PA6 and PA66) and polyesters (such as PET and PET) are thermoplastic semi-crystalline polymers with excellent thermal, mechanical and chemical resistance properties, which make it possible to use them in various application sectors, such as textiles, automotive, electrical and electronic components, construction, coatings, etc. For the textile sector in particular, these polymers are often used also in combination with elastomers.

Polyamide-based composite products are part of machinery, home, office and hotel furnishings and also in the clothing sectors. In this sector, polyamides are widely used in combination with elastomeric fibers, which provide particular physical adaptability by increasing user comfort, while in the sports sector they also allow better performance. The specific sectors wherein polyamide fibers are associated with elastomers relate to the production of swimwear, hosiery, sportswear and underwear, also in the medical sector and various others.

Elastic textiles based on the above-mentioned polymers generally contain elastomer in an amount between 5 and 30% by weight, depending on the final product.

As is now well known, both from a regulatory and an environmental and social sustainability perspective, synthetic polymers that are non-biodegradable and that potentially accumulate in the environment where they can remain for centuries, must be recovered at the end of their life to be reused and recycled.

The combination of polyamides with an elastomer for recycling purposes creates significant problems in that:
- the physical separation of polyamide and elastomer is very difficult due to the particular weaving of the two types of fiber, which have completely different mechanical characteristics, as elastomer has very low softening points compared to polyamides, resulting in rubbery physical states that are difficult to treat;
- the direct mechanical recycling of the textile obtained with the two types of fibers is practically unfeasible as it is physically impossible to return to granules via extrusion, given the different physical and thermal properties of the two polymers;
- furthermore, alternative uses in sectors other than the original elastic textiles, such as the creation of products in Engineering Polymers, are not easily possible due to the different technological properties of the two materials;
- the elastomer also contains in its structure a polyurethane part generally comprising an aromatic monomer such as MDI (methane diphenyl-diisocyanate), which in manufacturing recovery processes can give rise to compounds belonging to the aromatic aniline family, which are critical substances with carcinogenic properties and subject to specific restrictions and limits.

It should also be borne in mind that, due to the use the textile is intended for, a high amount of pre-consumer waste is already created during its production, which is added to that of the textile at the end of its life: at present, most of these pre- and post-consumer materials end up in landfills with the already well-known negative effects on the environment.

### Background art of the invention

In order to clarify both the problems to be faced in separating the elastomer from other synthetic fibers and the critical points to be addressed in this process, it is useful to briefly refer to the structure and function of the elastomeric substance.

Elastomers are so-called "block copolymers": one of the blocks is rigid and the other one is flexible. The flexible part generally consists of a polyglycol, while the rigid part consists of a block comprising aromatic rings, urethane bonds and urea bonds.

The final elastomer is typically obtained by reacting separately prepared pre-polymers, as described below, to obtain the following structure (I), wherein the flexible part is represented by the glycol unit repeated X times:

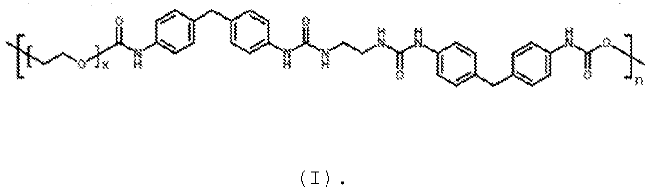

The aforementioned flexible part generally consists of about 40 units, when these consist of ethylene glycol. When, on the other hand, the glycol used is butylene glycol, the one most commonly used today, then the units are generally about 20.

Glycols that can be used for elastomers are, for example:
- ethylene glycol: HO-CH₂-CH₂-OH
- propylene glycol: HO-CH₂-CH₂-CH₂-OH
- butylene glycol (known as BDO, 1,4-butanediol): HO-CH₂-CH₂-CH₂-CH₂-OH.

The flexible polyglycol part is traditionally obtained from petroleum intermediates, but glycols from bio-masses also obtained via fermentation, as in the particular case of BDO, are increasingly emerging.

The rigid part is prepared from generally aromatic diisocyanates also reacted with diamines, such as methane diphenyl diisocyanate (MDI) and ethylenediamine. It should be noted that MDI is obtained from an aromatic amine that can be reformed in case of elastomer degradation.

The following compound (II) is an MDI obtained from methylen-dianiline and phosgene:

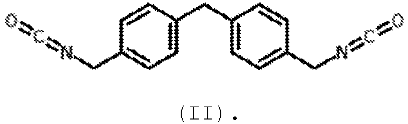

The rigid part may account for approximately 15-35% by weight of the elastomer, the polyglycol part fluctuates accordingly in the range 65-85% by weight of the final elastomer.

Elastomer production is distributed in all the areas of the world with a predominance in China and Asia in general and it is estimated to have maintained a yearly growth rate close to 7% in the decade 2010-2020, reaching a total of at least 800,000 tonnes globally.

Considering an average amount of elastomer in textiles of about 20%, it can be calculated that the production of polyamide- and/or polyester-based stretch textiles is in the order of at least 4-5 million tons/year, which are mostly sent to landfill at the end of their life.

In particular, total PA6-based stretch textiles are in the order of 250,000-350,000 tons/year, with PA6 polymer consumption estimated at around 200,000-280,000 tons/year.

As summarised in the opening section, the separation of the elastomer from the listed synthetic fibers is highly problematic even though it is the ongoing subject of many studies and patents as described and mentioned in the following section. The most relevant issues concerning the separation of synthetic and elastomeric fibers are the following:
- processes via solvent: they are known organic elastomer solvents among which N,N-dimethylacetamide DMAC (also the most widely used in elastomer production and spinning), dimethylformamide, dimethyl sulphoxide and others: these are generally expensive solvents and also toxicologically critical, so much so that DMAC, for example, has already been included by the European Chemical Agency (ECHA), in the list of SVHC (Substances of Very High Concern) for whose use specific authorisation is required and subject to special declarations in products containing more than 0.1%; in perspective, it will be among the substances subject to severe restrictions and definitively prohibited;
- mechanical processes: the rubbery texture that the combination of synthetic fiber and elastomer takes on makes it impossible, as such, to find machinery capable of crushing the textile, and even after grinding, the elastomer remains in practice "glued" to the fiber part, since the heat developed by friction is enough to melt it and make it adhere to the synthetic fiber polymer;
- thermal processes: the textile thermal treatment can in some cases lead to the disintegration of the elastomer; washing of the fiber with solvent mixtures, mostly highly flammable, such as methyl alcohol and other highly volatile ones, is then necessary. Thermal processes are also risky because the polyurethane part decomposes and the aromatic diisocyanate, such as MDI used for the rigid part, releases aromatic amines such as MDA (4, 4-diaminodiphenylmethane), which are highly toxic and known to be carcinogenic;
- cryogenic processes: grinding under cryogenic conditions at low temperatures with liquid gases (CO₂, N₂) succeeds in pulverising the textile, but the synthetic fiber and elastomer always remain fused together, and attempts to separate them with some solvent lead to the formation of gelatinised masses, even when a very high grinding solvent-to-powder ratio is used.

Finally, it must be considered that all the above-mentioned processes involve very expensive working cycles, loss of volatile solvents, recourse to high dilutions with subsequent energy-intensive liquid recovery steps, resulting in higher processing costs and an unfavourable environmental impact.

These conditions therefore make it extremely difficult to chemically or mechanically recycle polymers in combination with elastomer, either directly or after separation of the base polymer fiber from the elastomer, which is in any case always partial.

Also for the textile sectors wherein fiber-elastomer combinations are used, the need for recycling of end-of-life materials, in particular the recycling of synthetic fibers, is increasingly perceived and promoted by manufacturers, in order not to disperse contaminating and non-biodegradable substances into the environment and to meet the targets for reducing CO₂ emissions from fossil fuels. In addition, recycling is often made compulsory by regulations in force, which prohibit the disposal of certain materials in landfill and require that new products be manufactured using increasingly higher quantities of recycled materials.

Examples of known methods used for the separation and recycling of synthetic fibers from the elastomer are disclosed in the following Patents and articles.

Document EP2596932A2 discloses a process and a machine for separating elastomer from polyamide-based textiles using dimethylformamide: Nylon is explicitly indicated as reusable in Engineering Plastic but not for all typical Nylon uses. The elastomer is generically referred to as a silicone, and the most common elastomers with polyol and polyurethane parts are not mentioned; the solvent DMF belongs to the category of severely restricted solvents.

Document CH708675A2 discloses a process for the recovery of polyester-type polymer fibers in combination with other materials, as elastomer textiles, by dissolution with dimethylsulfoxide (DMSO), at a temperature between 100 °C and 175 °C, comprising the steps that make it possible to solubilise, separate and/or de-colour fiber, staple or yarn-type materials. After the addition of water, the recovered polymeric material is reduced into pellets by cold compaction. In Examples 5 and 6, where textile is used as the starting material, no elastomer is mentioned. Therefore, while it is claimed that the method described therein can be used for all fiber combinations, both the physical and chemical complications caused by temperatures at 175°C, wherein aromatic anilines are easily formed, do not emerge. Furthermore, the separation of DMSO and water remains complicated, with potential hot degradation and related formation of alcohols.

The article *"Simple process for separation and recycling of nylon 6 and polyurethane components from waste nylon 6*/*polyurethane debris"* by Caihong Gong, Kaihui Zhang, Ce Yang, Juan Chen, Shen Zhang and Chunwang Yi published in Textile Research Journal, 2020, describes a method for separating polyamide 6 from polyurethane-type elastomer in environmentally harmful textile waste. In this case also, the solvent of the elastomer is the critical substance DMF from which the elastomer is then recovered by dilution with water. The recovery of DMF requires particularly difficult distillation processes due to the instability of the solvent, which easily releases amines. Furthermore, it is stated that the recovered PA6 contains some parts of residual polyurethane, also stating also that its recycling is not affected. In fact, in the case of mechanical recycling, there may be an impact on the technological properties of the product, whereas in the case of chemical recycling with monomer regeneration, the polyurethane part inevitably degrades and leads to the formation of the dangerous aromatic amines that, among other things, cause the final quality of the monomer to be far from standard.

In the article *"Recycling of waste nylon 6*/*Spandex blended textiles by melt processing"* by Fangbing Lü, Donggang Yao, Youjiang Wang, Chaoxia Wang, Ping Zhu, Yifeng Hong, published in Composites Part B 77(2015) 232 and 237, a process is reported for separating the elastomer present in PA6 textiles, which is then recycled by melt processing and moulding after hydrolysing the elastomeric part under controlled conditions. Actually, the hydrolysis of the elastomer requires special conditions with even high temperatures such that, on the one hand, the structure and chains of the PA6 are altered, and on the other, the polyurethane block is degraded with the formation of the dangerous aromatic amines. Moreover, the alteration of the polyamide chains greatly limits its use also in the recycling of this polymer for the production of granules for Engineering Polymers.

The article *"*Removal of Spandex from nylon/Spandex blended textiles by selective polymer degradation", DG Yao, Youjiang Wang et al.: Article in Textile Research Journal February 2013" describes the treatment of the synthetic polymer thread/textile interwoven with the elastomer at 220°C, at the PA6 melting limit, for at least 2 hours with subsequent washing of the polymer from the degraded products with ethanol mixtures. Obviously on a scientific level the operation is possible, while on a practical level the use of highly flammable alcohol is a major critical issue. The hot decomposition of the elastomer when water is also present is very slow and difficult, while no data is reported on the substances derived from its degradation.

Document WO 2020/130825 A1 describes the separation of polyurethane elastomer from a cellulose-based textile or thread by means of a solvent with an amine or a solvent with a glycol. The use of organic amine associated with the solvent is introduced to induce polyurethane ammonolysis and leave the fiber free, while glycol has degradation effects that are similar to amine although these have not been well identified. In addition to amines and glycols, other additives that lead to elastomer transamidation or transesterification are mentioned. The method is also declared suitable for polyamide- and polyester-based fibers and textiles. The solvent used is dimethylformamide DMF, which, in the comparative examples, extracts the elastomer by no more than 30%, while with the selected additives it reaches 98-99%. The system is highly complex and is based on the use of substances that are highly critical and in many cases difficult to handle, such as the aforementioned alkylamines.

JP 2008031388A describes a method for the chemical recycling of polyamide (PA6) fiber textiles, wherein the textiles are surface-treated with a polyurethane or silicone resin that provides waterproofing or moisture permeability properties. The recycled textiles are first heat-treated with caprolactam or an aqueous solution thereof to selectively dissolve polyurethane or silicone resins and then submitted to depolymerisation to convert polyamide into caprolactam, i.e. the starting monomer of polyamide. Pre-treatment with caprolactam selectively dissolves polyurethane or silicone resins, thereby increasing the purity of the caprolactam obtainable from the PA6 depolymerisation reaction of the textiles. The caprolactam used to remove polyurethane and silicone resins is submitted to distillation and recovered in a substantially pure form (99.98 % by weight, i.e. at a level of purity obtained with the expensive and high energy expenses required to obtain the monomer suitable for producing the fiber grade polymer); it can be used to treat further polyamide textiles or it can be combined with the caprolactam produced in the depolymerisation reaction and intended for new uses. JP 2008031388A does not mention the destination of polyurethane and silicone resins remaining from the distillation of caprolactam.

The method described in JP 2008031388A is applied to the treatment of textiles made exclusively from polyamide yarns, where polyurethane and silicone resins are only present as a surface coating on the entire textile. Since the resins are applied on the surface, they can be removed relatively easily by selective dissolution with caprolactam. The method in JP 2008031388A, on the other hand, is little suitable for the treatment of stretch textiles, where synthetic fiber yarns (e.g. polyamide or polyester) are interwoven with elastomeric fiber yarns or, even, the two types of fibers are intimately combined with each other to form a single yarn (e.g. by interlacing or spiralling).

The method described in JP 2008031388A, moreover, has a relatively high environmental impact and is not cost-effective, as the caprolactam used for the dissolution of polyurethane and silicone resins is high-purity caprolactam, which is recovered for example at the end of the treatment of textiles by distillation. This makes the process of recovering polyamide from composite materials containing polyurethane or silicone resins difficult to carry out on an industrial scale and economically little convenient, especially when the textiles sent for recycling are stretch textiles.

The various examples mentioned clearly show that the issue of recovering polymers from textiles and fibers has been under study for many years and represents a generally perceived problem. At the same time, the environmental issue is strongly perceived, as in practice even today, large amounts of stretch textiles are sent to landfills or even abandoned in the environment.

### Summary of the invention

The Applicant has now found a process that does not require any use of organic solvents of the polar aprotic or flammable type such as those mentioned and described in the chapter on the prior art.

The process according to the present invention is based on the use of caprolactam or of aqueous solutions thereof to treat a composite material comprising elastomeric fibers and polyamide and/or polyester synthetic fibers. It was surprisingly found, in fact, that caprolactam is able to selectively dissolve the elastomer substantially completely, leaving the polyamide and/or polyester synthetic fibers substantially unaffected, the latter being able to be easily separated in a solid state from the elastomer (e.g. by filtration of the solution containing the dissolved elastomer) and, thus, to be subsequently sent to a chemical and/or physical recycling. The elastomer in the solution is instead precipitated separately by coagulation and then also recovered in solid form. In turn, the elastomer can be reused for producing new products and materials, mainly in sectors other than the original one.

In particular, it was observed that crude caprolactam, such as caprolactam produced in a PA6 hydrolytic depolymerisation process, can advantageously be used as an elastomer solvent, and that the use of an aqueous solution of (pure or crude) caprolactam is surprisingly effective to remove elastomeric polymer from polyamide stretch textiles. This allows an optimal integration of the treatment process of stretch textiles in a polyamide chemical recycling process. Polyamide- and elastomer-based stretch textiles can thereby be effectively recycled, avoiding their disposal in landfills or by incineration.

The process according to the invention can be carried out at atmospheric pressure, moderate temperatures and with contact times of the manufactured products containing synthetic and elastomeric fibers of limited duration, fully compatible with usual industrial practices.

In particular, the process according to the invention provides for the use of caprolactam, i.e. the monomer forming the polymer PA6, in the liquid state, that is as a pure substance in the molten state or in an aqueous solution, to selectively dissolve the elastomeric polymer present in the material to be treated.

Although it is not particularly advantageous to reuse the solid elastomer to produce fibers and yarns to elasticise synthetic polymer yarns, the recovered elastomer can advantageously be used as a raw material to produce partially aromatic polyols by reactions known to the person skilled in the art, e.g. by reaction with a polyol, e.g. a glycol, said glycol being preferably selected from: ethylene glycol, dipropylene glycol and mixtures thereof. These polyols, for example, can be used in the production of expanded polyurethanes in rigid or partially stretch form by known processes. Other possible applications for the recovered elastomer are the production of syngas by pyrolysis processes to obtain electrical and thermal energy in cogeneration plants.

The recovered polyamide or polyester polymer, on the other hand, can be recycled either chemically or mechanically. Chemical recycling is particularly suitable in the case of the recovery of polymers PA6 (polyamide 6), PET (polyethylene terephthalate) and PBT (polybutylene terephthalate), while in the case of PA66 (polyamide 66) mechanical recycling is more advantageous, especially for the Engineering Polymers sector.

Chemical recycling is also particularly advantageous in the case of the polymer PA6, as its depolymerisation yields crude caprolactam, which is subsequently purified by traditional processes; purification leads to obtain caprolactam of high purity and thus suitable for use as a monomer for the production of new polyamide yarns. In a PA6 depolymerisation plant, all or part of the caprolactam used for the dissolution of the elastomer can be combined to the crude caprolactam to be purified by the process according to the present invention. It is thereby possible to use a single purification system. Furthermore, as crude caprolactam is an effective solvent for elastomer removal, it is advantageously partly reused to treat further yarns or textiles and partly fed to subsequent purification steps. The process according to the present invention can be thus advantageously and easily integrated into the PA6 chemical recycling processes known in the art.

The present invention thus relates to a process for treating yarns and/or textiles comprising elastomeric polymer fibers in combination with synthetic fibers (hereinafter also referred to as blended fiber textiles or products) comprising polyamide and/or polyester in accordance with claim 1.

The present invention also relates to a process for recovering caprolactam from a yarn or a textile comprising polyamide fibers in combination with elastomeric fibers in accordance with claim 13.

Further features and advantages of the process according to the present invention form the subject matter of the dependent claims 2-12 and 14-15.

### Brief description of the figures

Figure 1 shows a diagram of a first embodiment of a process according to the present invention.
Figure 2 shows a graph related to the DSC analysis performed on a textile sample comprising PA6 fibers in combination with elastomeric Spandex^{®} fibers before the treatment according to the process of the invention.
Figure 3 shows a graph of the DSC analysis performed on the solid phase comprising PA6 recovered after the treatment according to the process of the invention.
Figure 4 shows a graph of the DSC analysis performed on the elastomeric polymer recovered by coagulation according to the process of the invention.
Figure 5 shows a diagram of a second embodiment of a process according to the present invention.

### Detailed description of the invention

A possible embodiment of the process according to the present invention is described hereinafter.

In accordance with the present invention, the separation of the elastomer is achieved by selective dissolution of the latter using caprolactam (CPL) or an aqueous solution thereof as a solvent for treating the yarn, textile or product comprising such elastomeric fibers in combination with synthetic fibers.

The solvents used for dissolving the elastomer can be analysed by gas-mass chromatography to determine the possible presence of aromatic amines. In the following examples, this evaluation provided negative results, as none of the samples tested showed chromatographic signals above the detection limits.

The blended fiber products that can be processed in accordance with the present invention are preferably yarns and textiles, more preferably stretch yarns and textiles.

In a particularly preferred embodiment, the textile is a stretch textile that comprises:
- at least one yarn comprising synthetic fibers, said yarn being interwoven with at least one elastic yarn comprising elastomeric fibers; or
- at least one elastic yarn wherein synthetic and elastomeric fibers are combined with each other to form the elastic yarn.

In the present invention, elastomeric fibers comprise fibers of a thermoplastic elastomeric polyurethane, preferably fibers of an aromatic thermoplastic elastomeric polyurethane. The thermoplastic elastomeric polyurethane comprises the reaction product of components comprising at least one polyol and at least one aromatic polyisocyanate.

The types of yarn and textile that can be treated by the process according to the present invention for the separation and recovery of elastomer can have the following commonly used elastomer/synthetic fiber (polyamide or polyester) weight ratios: a) 70:30, b) 76:24, c) 88:12. It is however possible to apply the process of the invention to yarns, textiles or products containing elastomeric fiber and synthetic fiber in any other weight ratio within the above-mentioned ranges. The textiles may also comprise additives (e.g. titanium dioxide) and/or dyes: it has been observed that these do not substantially alter the results of the separation process.

The textile to be treated is preferably reduced into small, 1-3 cm irregular pieces, e.g. by shredding. In the examples, these fragments were placed inside a wide-mouthed container equipped with mechanical/magnetic stirring immersed in the solvent comprising molten caprolactam or aqueous solutions thereof. The treatment of the yarn or textile is preferably a hot treatment, more preferably at a temperature in the range 80-175 °C, even more preferably 85-150 °C. In one embodiment, the solvent is preferably maintained at temperatures between 95 and 150 °C, bearing in mind that the melting point of caprolactam is 69 °C. It is preferable to maintain a temperature higher than the melting temperature in order to have fast dissolution kinetics and thus more compatible with the times and volumes of industrial processes. If the CPL monomer is used as it is, it is preferably kept, at all temperatures tested, in a nitrogen blanketing system because caprolactam in the molten state undergoes rapid oxidation and quality changes, also emphasised by strong yellowing. Molten caprolactam has a density of about 1.025 g/ml and a viscosity lower than 10 cP, so it can easily be used with normal transfer and stirring systems, and its aqueous solutions become even easier to handle industrially.

Caprolactam is preferably used as it is or in an aqueous solution in the weight concentration range from 70% to 100%. More preferably, the CPL concentration in the aqueous solution is greater than 60 % by weight, concentration limit at which the elastomer becomes insoluble, more preferably equal to or greater than 70 % by weight, even more preferably equal to or greater than 75 % by weight. In the case the aqueous solution is used, the most preferred caprolactam concentration is close to 80% by weight, e.g. in the range of 75% - 85% by weight.

Caprolactam can have a relatively high purity, as either substantially pure caprolactam (e.g. commercially available *fiber grade* caprolactam having a purity of 99.9 % by weight or higher) or crude caprolactam (having a purity lower than 99.9 % by weight, preferably in the range 94 - 97 % by weight) can be used. Substantially pure caprolactam and crude caprolactam can be used in the form of an aqueous solution. The purity of caprolactam can be determined by gas chromatography using methods known to the person skilled in the art.

In one embodiment, crude caprolactam can be obtained by a polyamide hydrolytic depolymerisation process, where caprolactam is recovered in an aqueous solution together with impurities. Impurities generally consist of acid compounds, mainly organic by-products of the process. Preferably, the aforementioned aqueous solution of crude caprolactam comprises: water; caprolactam in a concentration in the range of 60% - 85% by weight, preferably 75% - 85% by weight, relative to the weight of the solution; acid impurities in a total amount in the range of 40-100 meq/kg, preferably in the range of 50-80 meq/kg (the amount of impurities being determined by titration with an aqueous solution of NaOH 0.1 N).

Preferably, the temperature of the treatment with the solvent comprising caprolactam is in the range of 100-130°C, more preferably 110-125°C. The most preferred operating temperature is about 115-120°C, since a system is created that maintains atmospheric pressure. Using a CPL aqueous solution as a solvent, it is also possible to operate at higher temperatures, e.g. up to 170°C, using equipment suitable for working at pressures up to 5 bar.

It should be borne in mind that, although a standard *fiber grade* caprolactam has been used in some examples, it is nevertheless equally possible to use a crude caprolactam in an aqueous solution, such as the crude CPL obtained at the end of the CPL synthesis process at the stage before its purification (e.g. by distillation), e.g. a caprolactam of 95-98% purity, having in particular generally acid impurities.

Preferably, the pH of the crude CPL aqueous solution is in the range between 4.5 and 6.5.

By working at the lower temperatures in the above-mentioned range 95-150 °C, the risk of partially dissolving the synthetic fiber polymer is avoided, especially in the case of PA6 and PA66, with the advantage of avoiding the decomposition of the elastomer and the consequent possible formation of aromatic amines bonded to the polyurethane part obtained using MDI.

The use of an aqueous solution of caprolactam, even crude caprolactam, at relatively low temperatures (e.g. 100 - 130°C) is particularly effective in removing the elastomeric polymer in the case of elastomeric yarns and textiles, where synthetic fiber yarns (e.g. polyamide or polyester) are interwoven with elastomeric fiber yarns or, even, the two types of yarns are combined with each other to form a single yarn (e.g. by interlacing or spiralisation).

The duration of the selective elastomer dissolution treatment with the solvent including caprolactam is preferably in the range from 15 minutes to 240 minutes, more preferably from 30 minutes to 120 minutes, even more preferably from 30 minutes to 100 minutes, even more preferably from 30 minutes to 90 minutes.

Since dissolution times are relatively short, e.g. in the range between 30 and 90 minutes, the volumes of the equipment used for the treatment are compatible with the usual industrial equipment used in polyamide chemical recycling processes.

The weight ratios between the dissolving agent (solvent) of the elastomer and the fibers and/or textiles can vary over a wide range. Preferably, the ratio of the weight of said solvent to the total weight of said yarns and/or textiles submitted to treatment is in the range from 50:1 to 6:1, more preferably from 25:1 to 8:1.

After dissolution of the elastomer, the residual textile (solid phase remaining insoluble in the solvent) is separated from the liquid phase comprising the solvent and the elastomer dissolved therein, e.g. by filtration. Preferably, the residual textile is washed with fresh solvent and wrung out, e.g. in a mechanical filter with a manual press or industrial equipment. In order to remove the residual solvent, the solid phase comprising the polymer textile is preferably also washed with water at room temperature before drying. The resulting washing water can then be combined with the caprolactam solution recovered after coagulation of the elastomer. Washing water can also be added to the liquid phase comprising the solvent and the elastomer dissolved therein, possibly in addition to further water, to cause coagulation of the elastomer: following addition, coagulation may take place either as a result of the reduction of the caprolactam concentration (e.g. below 60-65% by weight) or as a result of cooling, preferably to a temperature in the range of 20-50°C, induced by the washing water generally used at room temperature. The washing water can also be combined with the liquid phase containing the coagulated elastomer before the latter is filtered.

After washing the textile, in the case of polyamides, it is possible to check the efficiency of the elastomer removal by acid hydrolysis with HCl. Since polyamides are completely hydrolysable by standard, official procedures, while the elastomer remains unaffected as a non-hydrolysable residue, it is possible to determine the solid elastomer residue remaining with the polyamide polymer by weighing.

In the case of yarns and textiles containing PET and PBT polyesters, the amount of residual elastomer can instead be assessed by means of NaOH-based alkaline hydrolysis and subsequent gravimetric determination, similarly to that described above for polyamides.

Regarding the behaviour of the elastomer with respect to acid hydrolysis, tests were carried out with both pure Spandex^{®} and degraded Spandex^{®} elastomer to see if it can be attacked by acid.

In the case of pure Spandex, the residue was 98.7 % by weight, i.e. about 100 % by weight considering a Spandex^{®} moisture content of about 1-1.7 % by weight and the uncertainty in the measurement calculations. Tests with degraded Spandex^{®} indicated 92-95% of residue, so there may be a small uncertainty in the determination in this case, but not such as to alter the significance of the results obtained.

In qualitative terms, an initial assessment of the effectiveness of the elastomer removal can also be made by manually checking the elasticity of the tissue: in fact, before the treatment process, the tissue is typically manually stretchable, whereas after elastomer removal, the tissue becomes no longer stretchable.

The quality of the polyamide and/or polyester polymer obtained after separation of the elastomer fraction can also be checked using the usual spectrophotometric techniques FTIR, differential thermal analysis DSC compared with a standard reference polymer.

Another control that can be performed on the quality of the polymers obtained after selective dissolution treatment with the solvent comprising caprolactam is the determination of the relative viscosity of polyamides using the ISO 307 method (1% in H₂SO₄). For PET and PBT, the intrinsic viscosity can instead be determined, e.g. by dissolving 1% by weight of polyester in dichloroacetic acid.

The experiments shown in the examples were conducted at different temperatures from 85°C to 150°C; the contact time with the solvent to achieve elastomer dissolution was set between 30 and 90 minutes; the tests were also carried out by varying the solvent amount.

The most preferred treatment conditions for the process according to the present invention are as follows: temperature of 110-115°C; ratio of the weight of the liquid caprolactam or 80% CPL aqueous solutions to the weight of the textile of about 10:1, residence time in contact with the solvent of about 60 minutes.

In general, a Spandex^{®} residue in PA6 of about 1.5 % by weight was found at the end of the treatment, which means a PA6 purity of 98.5 % by weight. The overall removal capacity of Spandex^{®} observed is always above 95%. As shown in the examples, specific gas-mass analyses on different samples do not show the formation of aromatic amines.

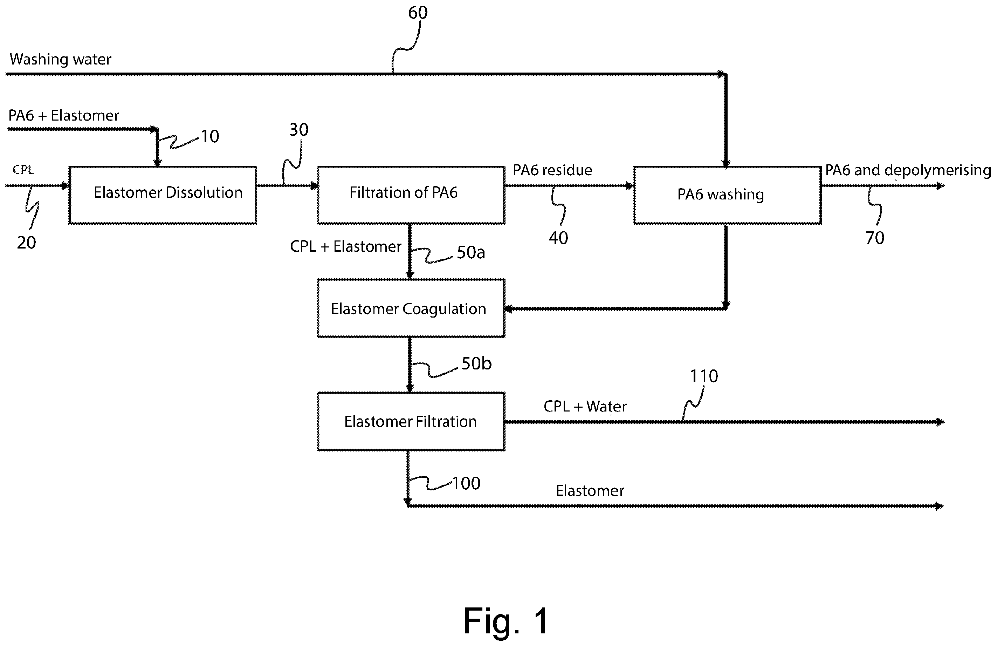

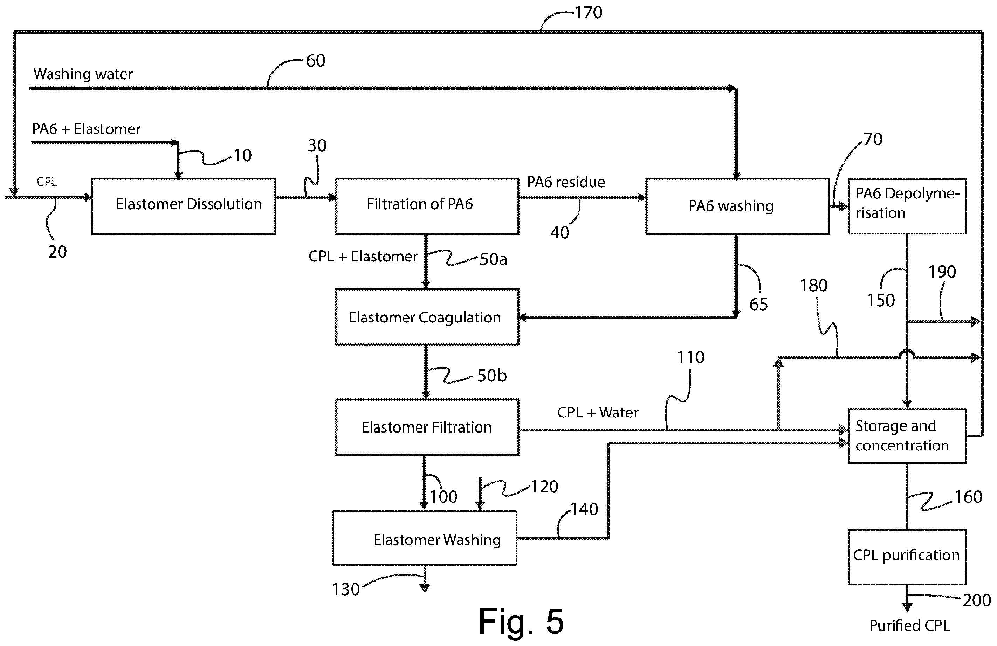

With reference to Figures 1 and 5, two preferred embodiments of the process according to the present invention are described below. In both figures, a same number or reference label identifies a same element of the process or plant.

In Figure 1, a material 10 to be treated, for example a blended fiber textile comprising PA6 fibers and elastomeric polyurethane fibers, is submitted, after having been crushed, to step of dissolving the elastomer with a solvent 20 comprising caprolactam, for example at a temperature of 110 - 125°C, with the formation of a two-phase system 30 comprising a liquid phase comprising the elastomeric polyurethane dissolved in the solvent and a solid phase comprising the PA6 textile. Advantageously, the solvent 20 is at least partially recycled by the subsequent process steps (see stream 170 in Figure 5), as shown below. The two-phase system 30 is submitted to filtration, e.g. at a temperature of 110 - 115°C, to separate the solid phase 40 (PA6 Residue) and the liquid phase 50a (CPL + Elastomer). The PA6 textile 40 separated from the liquid phase is optionally submitted to a washing step with water 60 to remove any residual solvent. The washed and optionally dried textile 70 is then ready to be recycled. The liquid phase 50a is submitted to a coagulation step, e.g. by cooling by adding the washing water of the textile 65, so that the elastomeric polyurethane dissolved therein solidifies. The liquid phase 50b containing the coagulated elastomeric polyurethane is submitted to a filtration step where the elastomeric polyurethane 100 (Elastomer) is separated from the solvent 110 (CPL + Water). As shown in Figure 5, the elastomeric polyurethane 100 is optionally washed with water 120 to obtain a washed solid coagulated polymer 130.

In the embodiment schematically shown in Figure 5, the fragments of PA6 textile 70 lacking the elastomeric polyurethane are started in a hydrolytic depolymerisation process to recover caprolactam from PA6. The hydrolytic depolymerisation process leads to the formation of crude caprolactam, i.e. an aqueous solution 150 with caprolactam and impurities, which is advantageously stored in a storage and concentration tank together with the solvent 110 from the filtration step of the elastomeric polyurethane and elastomeric polyurethane washing water 140 containing minor amounts of caprolactam.

In accordance with the embodiment shown, a first aliquot 160 of the aqueous solution of crude caprolactam present in the storage tank is fed to a purification system to obtain purified caprolactam 200. The purification system, for example, comprises at least one distillation step. A second aliquot 170 of the aqueous solution of crude caprolactam is instead used as a solvent for the removal of elastomeric polyurethane from further blended-fiber textile 10. The weight ratio between the first aliquot 160 and the second aliquot 170 is preferably in the range from 1:100 to 100:1, more preferably from 1:50 to 50:1, even more preferably from 1:3 to 3:1, e.g. 1:1. In particular, when the volume of the first aliquot 160 is equal to that of the second aliquot 170, the amount of crude caprolactam submitted to purification is equal to the amount of crude caprolactam that initially enters the process (stream 20 in Figure 5); when the process is conducted in continuous mode, this avoids the accumulation of by-products and impurities in the plant during the production cycle.

The solvent 110 from the elastomeric polyurethane filtration step and the aqueous solution of crude caprolactam 150, each independently, can also be fed directly to the elastomeric polyurethane dissolution step to partially replace or to supplement the solvent 20 (streams 180 and 190, respectively).

In a preferred embodiment, the solvent 20 used to remove the elastomeric polyurethane from the textile 10 comprises both at least a part of the aqueous solution of crude caprolactam resulting from depolymerisation and the solvent recovered after separation of the coagulated elastomeric polyurethane. The use of crude caprolactam as a selective solvent to remove the elastomer from the starting yarn or textile, in fact, makes the chemical recycling of blended fiber textiles by PA6 depolymerisation easier and more cost-effective, as it eliminates or significantly reduces the caprolactam purification operations required in state-of-the-art processes (e.g. JP 2008031388) with consequent economic and environmental advantages.

The hydrolytic depolymerization step can be conducted in accordance with processes known to a person skilled in the art.

In general, in the depolymerisation step, the PA6 textile can be reacted with water in the form of a vapour stream, preferably in the presence of an acid catalyst. The PA6 textile is preferably submitted to hydrolytic depolymerization, using a superheated vapour stream, at a temperature in the range 200°C - 450°C, e.g. at a pressure of 0.2-20 bar.

The acid catalyst can be one of those known to a person skilled in the art, selected for example from inorganic acids (e.g. orthophosphoric acid and boric acid), organic acids (e.g. p-toluenesulphonic acid) and ammonium phosphate salts.

In one embodiment, the caprolactam which is formed during depolymerization is separated in the gas phase from the depolymerization mixture, e.g. by a stream of water vapour, and is then condensed. For example, the vapours leaving the reactor can be conveyed to a condensation system by direct contact with water, which makes it possible to separate two streams: a first stream essentially consisting of vapour only; a second stream consisting of an aqueous solution containing crude caprolactam at a concentration equal to or higher than 50%.

The purification of caprolactam can be performed using methods known to a person skilled in the art, e.g. by solvent or solvent-free extraction (as described in US 20190382339), hydrogenation, treatment with potassium permanganate and distillation to separate light and heavy by-products.

The following examples are provided purely for the purpose of illustration of the present invention and should not be regarded as limiting the scope of protection defined by the appended claims.

### EXAMPLES

The standard procedure followed for carrying out the experimental tests was as follows:
- Caprolactam or its solution in water (80%-20% w/w) is added to the dissolution tank and heated to a temperature of 115-120°C. After the desired temperature has been reached, a known amount of PA6-Spandex^{®} blended fiber textile is introduced into the system. The ratio of solvent to solid material was kept in the range of 8-12:1 by weight. The liquid-solid system is kept under stirring generally for 1 hour, which is a sufficient time to achieve complete dissolution of the elastomeric fibers, leaving the PA6 textile solid and intact (biphasic mixture).
- Subsequently, by means of a decanting system, the material is introduced into a piston filter operating at a temperature of 115-120°C. The remaining solid polymer carcass (solid phase) is thus separated from the liquid phase comprising caprolactam, dissolved Spandex^{®} and possibly water.
- The polymer carcass is then washed with a caprolactam-water solution (80%-20% w/w) at a washing solvent:solid phase ratio of 5-10:1 to remove any Spandex^{®} residues and then further wrung out. The PA6 textile without the elastomer thus obtained, after evaporation of residual moisture, can be compacted and sent for chemical and/or mechanical recycling.
- The hot solution containing the dissolved Spandex^{®} is allowed to cool to room temperature under stirring. This leads to coagulation of the Spandex^{®} in the form of a sticky solid that can be easily separated by filtration. It has been observed that the weight percentage of Spandex^{®} in the final recovered PA6 does not generally exceed 1.5 per cent, but values lower than 0.5 per cent can often be achieved, and in some cases remains at a level of 2-3%.
- Finally, the Spandex^{®}-free solvent thus obtained can be reused in another treatment cycle of further textile material.
In the following examples, the elastomeric material is formed by Spandex.

### Example 1: Testing the solubility of the elastomer in liquid caprolactam

13 g of elastomer (Spandex^{®} thread) as it is was placed in a beaker containing 50 g of caprolactam melted at 120°C, dipping the thread manually below the liquid level. The beaker was closed at the surface to prevent vapour loss, even though the solvent temperature was well below the boiling point of the caprolactam, which was 267 °C. After 60 minutes, the mixture became completely clear and transparent, taking on a yellow colour due to partial alteration of the caprolactam in contact with the air present in the container. The test described showed that caprolactam is a solvent capable of effectively dissolving the elastomer in the temperature range indicated.

### Examples 2-4: Testing the solubility of the elastomer in liquid caprolactam at various temperatures

The test in Example 1 was repeated at different temperatures in order to obtain a solubility trend of the elastomer in caprolactam. The results (including Example 1) are shown in Table 1 below, organised by increasing temperature.

**Table 1**

| Example | T [°C] | CPL [g] | Elastomer [g] | Total weight [g] | Solubility [%w/w] | Time [min] | Notes |
|---|---|---|---|---|---|---|---|
| 2 | 95 | 50 | 5 | 55 | 9.1 | 60 | |
| 1 | 120 | 50 | 13 | 63 | 20.6 | 60 | |
| 3 | 150 | 50 | 32 | 82 | 39.0 | 60 | Viscous solution |
| 4 | 170 | 50 | 50 | 100 | 50.0 | 60 | Difficulty in stirring due to high viscosity |

### Examples 5-8: Testing the solubility of the elastomer in aqueous caprolactam solutions at various temperatures

Using the same procedure as in Example 1, the solubility of the same elastomer in an aqueous caprolactam solution was tested up to the maximum temperature limit of 120 °C, this temperature being the temperature at which the mixture begins to boil at atmospheric pressure.

In the examples reported in Table 2, an aqueous mixture of 80% by weight of caprolactam was used. The solubility was considered to be that of the elastomer with respect to anhydrous fraction, sum of elastomer and caprolactam.

**Table 2**

| Example | T [°C] | CPL:H₂O (80:20) [g] | Elastomer [g] | Total weight [g] | Solubility [%w/w] | Time [min] |
|---|---|---|---|---|---|---|
| 5 | 85 | 50 | 1 | 51 | 2.4 | 60 |
| 6 | 95 | 50 | 4 | 54 | 9.1 | 60 |
| 7 | 100 | 50 | 9 | 59 | 18.4 | 60 |
| 8 | 120 | 50 | 12 | 62 | 23.1 | 60 |

The aqueous mixture of 80% caprolactam is a good solvent of the elastomer even at such temperatures as to remain below the boiling point of the system.

### Example 9: Testing the precipitation conditions of the elastomer

The solution in Example 8 was allowed to cool to room temperature at 25°C to cause the elastomer coagulation. The solution gradually became opalescent with the formation of a suspension of a solid.

The coagulated solid was filtered, washed with water and dried. The solid recovered was over 99% of the weight of elastomer initially treated. The FTIR spectrum and DSC showed that the recovered elastomer matched the original elastomer.

### Examples 10-16: Separation of PA6 from the elastomer in ratios varying by dissolution in 100% molten caprolactam at various temperatures

Textile and thread samples formed from PA6 with elastomer in three different weight ratios were reduced to small pieces and immersed in caprolactam kept liquid in a beaker under stirring. The beaker was covered with aluminium foil to prevent vapours from partially escaping and to reduce as much as possible contact with the air. The samples were kept in contact with the liquid caprolactam for a pre-established time as indicated in Tables 3 -5, then extracted from the liquid phase, washed with water to remove residual caprolactam from the surface, and analysed via FTIR and acid hydrolysis (with control and weight of the non-hydrolysable residue, corresponding to the proportion of elastomer remaining in the polymer).

The following tables show the test results for the three different ratios of PA6 to elastomer: 88:12 (Table 3), 76:24 (Table 4) and 70:30 (Table 5).

**Table 3 - Test on white warp-knitted textile with a PA6:elastomer ratio of 88:12**

| Ex. | Textile [g] | PA6 [g] | CPL [g] | CPL to textile ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|
| 10 | 10.65 | 9.37 | 250 | 25:1 | 95 | 60 | 9.32 | 99.55 | 0.45 | 99.1 |
| 11 | 10.11 | 8.89 | 250 | 25:1 | 110 | 60 | 8.36 | 99.63 | 0.37 | 93.7 |
| 12 | 10.06 | 8.85 | 250 | 25:1 | 140 | 60 | 8.45 | 99.94 | 0.06 | 95.4 |

The PA6 fiber after washing and drying was checked in terms of relative viscosity (at 1% H₂SO₄, as per traditional methodology) with results in all three cases between 2.40 and 2.45, which are typical values for the polymer used in textile fibers.

**Table 4 - Test on white interlaced wire with PA6: elastomer ratio of 76:24**

| Ex. | Thread [g] | PA6 [g] | CPL [g] | CPL to textile ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|
| 13 | 9.91 | 7.53 | 250 | 25:1 | 95 | 60 | 7.53 | 99.37 | 0.63 | 99.4 |
| 14 | 10.11 | 7.68 | 250 | 25:1 | 140 | 60 | 7.60 | 99.77 | 0.23 | 99.3 |

**Table 5 - Test on grey warp-knitted textile with a PA6:elastomer ratio of 70:30**

| Ex. | Textile [g] | PA6 [g] | CPL [g] | CPL to textile ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|
| 15 | 9.97 | 6. 98 | 250 | 25:1 | 95 | 60 | 7.01 | 99.56 | 0.44 | 99.97 |
| 16 | 10.46 | 7.32 | 250 | 25:1 | 140 | 60 | 7.23 | 99.63 | 0.37 | 99.43 |

### Examples 17A, 17B and 17C: Separation of PA6 from the elastomer by dissolution in 100% molten caprolactam with reduction of caprolactam-to-textile ratio (and different dissolution times)

In the following examples (Table 6), the test was repeated as in Examples 10-16, reducing the caprolactam-to-textile ratio. A textile with an 80:20 ratio of PA6 to elastomer was used.

In the Example 17A, a dissolution time equal to that of the previous examples was kept: the reduction in the amount of caprolactam leads to a lower removal of elastomer, which nevertheless remains very high, passing from the initial 20% to 1.3%.

**Table 6**

| Ex. | Textile [g] | PA6 [g] | CPL [g] | CPL to textile ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|
| 17A | 13.5 | 10.8 | 250 | 19:1 | 120 | 60 | 10.7 | 98.70 | 1.30 | 97.79 |
| 17B | 14.2 | 11.4 | 250 | 18:1 | 120 | 30 | 11.3 | 97.68 | 2.32 | 96.82 |
| 17C | 14.3 | 11.4 | 250 | 17:1 | 120 | 90 | 11.1 | 99.34 | 0.66 | 96.73 |

By extending the dissolution time (as in Example 17C), it is possible to achieve the results of Examples 10-16 in terms of elastomer removal, even if less caprolactam is used.

### Examples 18-22: Separation of PA6 from the elastomer by dissolution in an aqueous solution of 80% caprolactam from samples with various PA6-to-elastomer ratios

Similarly to the previous examples, tests were carried out with materials having different weight ratios between PA6 and elastomer. In Example 18, a spiral yarn was used, while in Examples 19 to 22, a white warp-knitted textile was used (Table 7).

**Table 7**

| Ex. | PA6 to elastomer ratio | Sample [g] | PA6 [g] | CPL:H₂O (80:20) [g] | (CPL:H₂O) to sample ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|---|
| 18 | 90:10 | 63.49 | 57.1 | 500 | 8:1 | 115 | 60 | 57.61 | 96.38 | 3.62 | 97.17 |
| 19 | 88:12 | 38.51 | 33.9 | 500 | 13:1 | 115 | 60 | 33.21 | 97.65 | 2.35 | 95.69 |
| 20 | 85:15 | 58.27 | 49.5 | 500 | 9:1 | 115 | 60 | 50.51 | 97.03 | 2.97 | 98.93 |
| 21 | 80:20 | 78.58 | 62.8 | 500 | 6:1 | 115 | 60 | 63.21 | 96.84 | 3.16 | 97.36 |
| 22 | 70:30 | 63.26 | 44.3 | 500 | 8:1 | 115 | 60 | 45.12 | 95.81 | 4.19 | 97.62 |

The aqueous solution of caprolactam maintains a very high elastomer dissolution capacity, with efficiency values of even more than 97% regardless of the initial solvent:polymer ratio, while operating with relatively short contact times. The aqueous caprolactam solution also appears more efficient than the liquid monomer in its molten state.

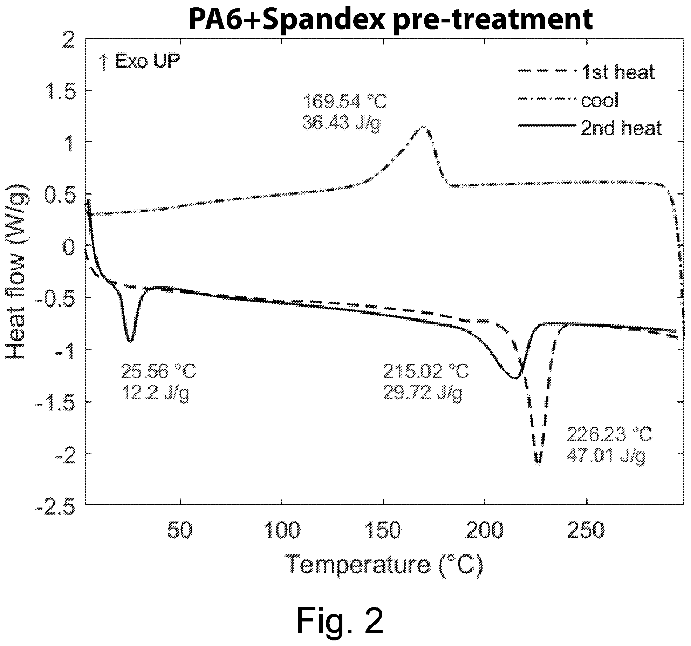

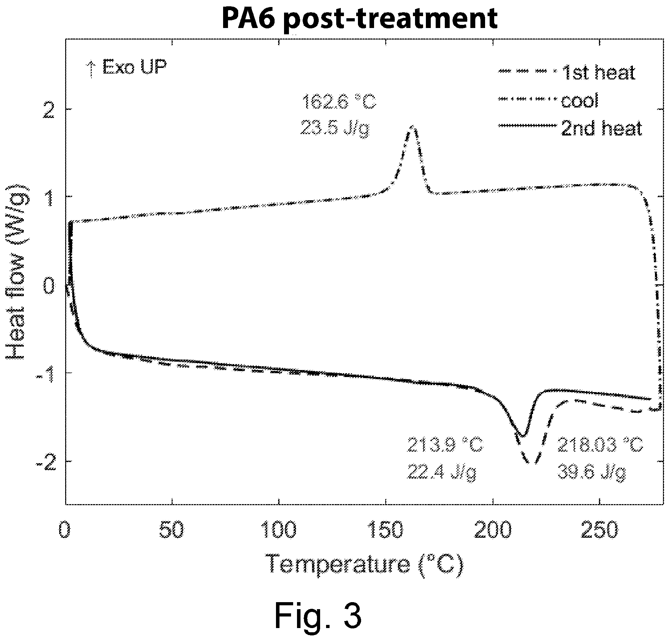

From the comparison of the attached Figures 2 and 3, which show the DSC analysis of the PA6 textile recovered from Example 19 (Figure 3) with that of the same pre-treatment textile, it can be gathered that the textile recovered in Example 19 appears to contain only PA6, with a melting point at approximately 220°C.

### Example 23: Separation of the elastomer from the textile and subsequent coagulation by cooling of the lactam solution

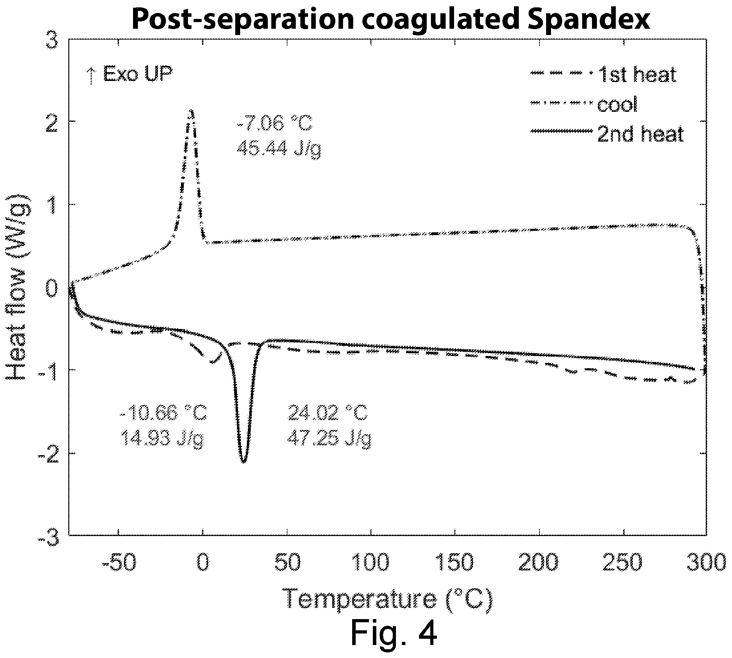

The solution of Example 21 at the end of the dissolution treatment (lactam solution) was cooled down to 25°C in order to coagulate the elastomer. The coagulated solid mass was filtered, washed with water and dried: DSC analysis shows that no PA6 is present in the coagulated mass and that this mass corresponds to a low melting elastomeric polymer (Figure 4).

### Example 24: Separation of the elastomer from the textile and its subsequent coagulation by dilution with water and cooling of the lactam solution

Starting with the lactam solution of Example 21, additional water was added to promote coagulation of the elastomer. For this purpose, they were used:
- 206 g of solution containing the elastomer (estimated percentage of about 3%);
- 120 g of washing water.

This resulted in the composition shown in Table 8 below:

**Table 8**

| Final composition | Amount [g] | Composition [%] |
|---|---|---|
| Caprolactam | 160 | 49.1 |
| Water from lactam solution | 40 | 49.1 |
| Added water | 120 | |
| Elastomer | 6 | 1.8 |
| Total | 326 | 100 |

The aqueous solution of approximately 49% caprolactam was analysed both via gas-mass and HPLC to search for aromatic amines. The results shown in Table 9 below were obtained:

**Table 9**

| Aromatic amine | Result from gas-mass | Notes |
|---|---|---|
| Aniline | Not detectable | |
| MDA | Not detectable | Aromatic amine derived from MDI with which the elastomer is produced |
| p-Toluidine | Not detectable | Aromatic amine derived from TDI if used in the elastomer |

An AGILENT liquid chromatograph mod. 1100, equipped with autosampler, column thermostat oven, degasser, DAD detector and HP ChemStation workstation or equivalent was used for the analysis of aromatic amines.

By setting up the chromatograph under the conditions developed, the retention times for the aforementioned aromatic amines gave the following results:

**Table 10**

| Compound | Rt [min] |
|---|---|
| Aniline | 6.1 |
| p-Toluidine | 6.7 |
| MDA | 9.0 |

No peak at these times was found in the sample of caprolactam solution obtained in Example 24.

Subsequently, similar samples of lactam solutions from the separation of textile with elastomer were checked, with consistently negative results.

The use of the elastomer separation system via caprolactam has thus shown that, unlike other thermal methods and other solvents, it does not cause degradation of the polyurethane part with formation of the dangerous substances of the aromatic amine family.

### Example 25: Separation of the elastomer from PA6 textile with 80% crude caprolactam solution

Bearing in mind that the caprolactam used for the dissolution of the elastomer, even if initially used at the level of the fiber grade monomer, will eventually be contaminated and will have to be submitted to purification by means of the known processes, the direct use of a crude CPL solution before purification was also tested.
The quality of the CPL solution in this case was as follows:
- CPL in solution via refractometer: 82.12%;
- Acidity: 65 meq/kg;
- GC analysis: 98.48% purity, 8 light by-products, 8 heavy by-products.

With this crude CPL solution, a grey warp-knitted textile was dissolved as in Examples 18-22. The data are shown in the Table below.

**Table 11**

| Ex. | PA6 to elastomer ratio | Sample [g] | PA6 [g] | Crude CPL 80% [g] | Crude CPL solution to sample ratio | T [°C] | Time [min] | Residue [g] | PA6 purity by hydrolysis [%] | Residual elastomer in PA6 [%] | PA6 recovery yield [%] |
|---|---|---|---|---|---|---|---|---|---|---|---|
| 25 | 85:15 | 41.3 | 35.1 | 500 | 12:1 | 115 | 60 | 35.5 | 96.54 | 3.46 | 97.5 |

The result is fully comparable with the test results of Examples 18-22, where the 80% pure caprolactam solution was used.

After coagulation of the elastomer, as described in Example 23, the lactam solution was analysed again and the following results were obtained:
- CPL in solution via refractometer: 83,23%;
- Acidity: 60 meq/kg;
- GC analysis: purity 98.86%, 9 light by-products, 8 heavy by-products (similar to the starting GC).

### Example 26: Separation of the elastomer from PA66 textile with 80% crude caprolactam solution

Similarly to Example 25, a test was carried out to separate the elastomer from a PA66 textile. The results are shown in Table 12:

**Table 12**

| Ex. | PA66 to elastomer ratio | Sample [g] | PA66 [g] | Crude CPL 80% | Crude CPL solution | T [°C] | Time [min] | Residue [g] | PA66 purity by hydrolysis | Residual elastomer in PA66 | PA66 recovery yield |
|---|---|---|---|---|---|---|---|---|---|---|---|
| | | | | [g] | to sample ratio | | | | [%] | [%] | [%] |
| 26 | 70:30 | 62.5 | 43.75 | 500 | 8:1 | 115 | 60 | 44.1 | 99.15 | 0.85 | 99.5 |

The PA66 fiber after washing and drying was checked in terms of its relative viscosity at 1% in H₂SO₄ with a result of 2.54, which is a typical value for the polymer used in textile fibers.

### Example 27: Separation of the elastomer from PET textile with 80% crude caprolactam solution

Similarly to what shown in Example 25, a test was carried out to separate the elastomer from a PET textile. The results are shown in Table 13:

**Table 13**

| Ex. | PET to elastomer ratio | Sample [g] | PET [g] | Crude CPL 80% [g] | Crude CPL solution to sample ratio | T [°C] | Time [min] | Residue [g] | PET purity by alkaline hydrolysis [%] | Residual elastomer in PET [%] | PET recovery yield [%] |
|---|---|---|---|---|---|---|---|---|---|---|---|
| 27 | 80:20 | 51.11 | 40.89 | 500 | 10:1 | 115 | 60 | 39.88 | 98.32 | 1.68 | 95.9 |

The PET fiber after washing and drying was checked in terms of intrinsic viscosity (dissolution in 1% dichloroacetic acid by in-house method) with a result of 0.78, and compared with the starting viscosity with a value of 0.8. The process, therefore, does not lead to a significant loss of viscosity.
Note that in this case the elastomer content was determined by alkaline hydrolysis with NaOH.

### Example 28: Separation of the elastomer from PBT textile with 80% crude caprolactam solution

Similarly to Example 25, a test was carried out to separate the elastomer from a PBT textile. The results are shown in Table 14.

**Table 14**

| Ex. | PBT to elastomer ratio | Sample [g] | PBT [g] | Crude CPL 80% [g] | Crude CPL solution to sample ratio | T [°C] | Time [min] | Residue [g] | PBT purity by alkaline hydrolysis [%] | Residual elastomer in PBT [%] | PBT recovery yield [%] |
|---|---|---|---|---|---|---|---|---|---|---|---|
| 28 | 80:20 | 50.39 | 40.31 | 500 | 10:1 | 115 | 60 | 39.76 | 97.14 | 2.86 | 95.82 |

The PBT fiber after washing and drying was checked in terms of intrinsic viscosity (dissolution in 1% dichloroacetic acid by in-house method) with a result of 0.87, and compared with the starting viscosity with a value of 0.88. The process, therefore, does not lead to a significant loss of viscosity. Note that in this case the elastomer content was determined by alkaline hydrolysis with NaOH.

## Claims

1. Process for treating a yarn or a textile comprising:
- synthetic fibers selected from: polyamide fibers, polyester fibers and combinations thereof;
- elastomeric fibers;
where said process comprises the following steps:
i. placing the yarn or textile in contact with a solvent comprising caprolactam to obtain a two-phase system comprising:
(a) a liquid phase comprising an elastomeric polymer dissolved in said solvent,
(b) a solid phase comprising said synthetic fibers;
ii. separating the solid phase (b) from the liquid phase (a) to recover said synthetic fibers;
iii. coagulating the elastomeric polymer in the liquid phase (a) leaving step ii;
iv. separating the coagulated elastomeric polymer from the liquid phase (a),
wherein said elastomeric fibers comprise fibers of an aromatic elastomeric thermoplastic polyurethane which comprises the reaction product of components comprising at least one polyol and at least one aromatic polyisocyanate.

2. Process according to claim 1, wherein said synthetic fibers comprise polyamide fibers selected from: PA6 fibers, PA66 fibers and combinations thereof, and/or said synthetic fibers comprise polyester fibers selected from: PET fibers, PBT fibers and combinations thereof.

3. Process according to claim 1 or 2 for treating a stretch textile, where said textile comprises:
- at least one yarn comprising said synthetic fibers, said yarn being interwoven with at least one elastic yarn comprising said elastomeric fibers; or
- at least one elastic yarn wherein said synthetic fibers and said elastomeric fibers are combined with each other to form said elastic yarn.

4. Process according to any one of claims 1 to 3, wherein said solvent comprises an aqueous solution of caprolactam, preferably an aqueous solution of crude caprolactam having a purity in the range 94% - 97% by weight.

5. Process according to claim 4, wherein said aqueous solution of caprolactam contains caprolactam in an amount equal to or greater than 60% by weight relative to the weight of the solution, preferably equal to or greater than 70% by weight, even more preferably equal to or greater than 75% by weight.

6. Process according to any one of claims 1 to 5, wherein step i. is conducted at a temperature in the range 80-175°C, preferably 85-150°C, more preferably 100-130°C, even more preferably 110-125°C.

7. Process according to any one of claims 1 to 6, wherein in step i. the ratio of the weight of said solvent to the total weight of said yarn or said treated textile is in the range from 50:1 to 6:1, preferably in the range from 25:1 to 8:1.

8. Process according to any one of claims 1 to 7, wherein:
- said solvent comprises an aqueous solution of caprolactam;
- said step i. is conducted at a temperature in the range 100-130°C, preferably 110-125°C;
- the duration of said step i. is in the range from 45 minutes to 110 minutes, preferably from 60 minutes to 100 minutes.

9. Process according to any one of claims 1 to 8, wherein said coagulation step iii comprises cooling said liquid phase (a) leaving said step ii, preferably to a temperature in the range of 20-50°C.

10. Process according to any one of claims 1 to 9, comprising reacting the coagulated elastomeric polymer with a glycol to obtain a polyol, said glycol being preferably selected from: ethylene glycol, dipropylene glycol and mixtures thereof.

11. Process according to any one of claims 1 to 10, comprising feeding said synthetic fibers leaving step ii. to a chemical recycling process.

12. Process according to claim 11, wherein said synthetic fibers comprise PA6 fibers and said chemical recycling process comprises depolymerising said PA6 to obtain epsilon-caprolactam, or wherein said synthetic fibers comprise PET and/or PBT fibers and said chemical recycling process comprises depolymerising said PET and/or PBT by glycolysis.

13. Process for recovering caprolactam from a yarn or a textile comprising polyamide fibers in combination with elastomeric fibers, where this process comprises the following steps:
A1. placing the yarn or textile in contact with a solvent comprising caprolactam to obtain a two-phase system comprising:
(a) a liquid phase comprising an elastomeric polymer dissolved in said solvent,
(b) a solid phase comprising said polyamide fibers;
A2. separating the solid phase (b) from the liquid phase (a) to recover said polyamide fibers;
A3. coagulating the elastomeric polymer in the liquid phase (a) leaving step A2;
A4. separating the coagulated elastomeric polymer from the liquid phase (a) comprising said solvent;
B. submitting said polyamide fibers recovered in step A2 to a polyamide hydrolytic depolymerisation reaction to obtain an aqueous solution of caprolactam;
C. feeding a first aliquot of said aqueous caprolactam solution to a purification system to obtain purified caprolactam;
wherein in said step A1 said solvent comprises at least a second aliquot of said aqueous caprolactam solution obtained in said step B, wherein said elastomeric fibers comprise fibers of an aromatic elastomeric thermoplastic polyurethane which comprises the reaction product of components comprising at least one polyol and at least one aromatic polyisocyanate.

14. Process according to claim 13, wherein in said step A1 said solvent comprises at least a part of said liquid phase (a) comprising said solvent obtained in said step A4.

15. Process according to claim 13 or 14, wherein in said step A1 said solvent comprises an aqueous solution of caprolactam, where said caprolactam is in an amount equal to or greater than 60% by weight relative to the weight of the solution, preferably equal to or greater than 70% by weight, even more preferably equal to or greater than 75% by weight.

## Patentansprüche

1. Verfahren zur Behandlung eines Garns oder eines Textilstoffs, umfassend:
- Kunstfasern, ausgewählt aus: Polyamidfasern, Polyesterfasern und Kombinationen daraus;
- Elastomerfasern;
wobei das Verfahren die folgenden Schritte umfasst:
i. das Garn oder Textil mit einem Caprolactam enthaltenden Lösungsmittel in Kontakt bringen, um ein Zweiphasensystem zu erhalten, das Folgendes umfasst:
(a) eine flüssige Phase, die ein in dem genannten Lösungsmittel gelöstes elastomeres Polymer enthält,
(b) eine feste Phase, die die genannten synthetischen Fasern enthält;
ii. Abtrennen der festen Phase (b) von der flüssigen Phase (a), um die genannten synthetischen Fasern zu gewinnen;
iii. Aushärten des elastomeren Polymers in der flüssigen Phase (a) nach Schritt ii;
iv. Abtrennen des ausgehärteten elastomeren Polymers von der flüssigen Phase (a), wobei die genannten Elastomerfasern Fasern aus einem aromatischen elastomeren thermoplastischen Polyurethan umfassen, das das Reaktionsprodukt von Komponenten umfasst, die mindestens ein Polyol und mindestens ein aromatisches Polyisocyanat enthalten.

2. Verfahren nach Anspruch 1, wobei die synthetischen Fasern Polyamidfasern umfassen, die ausgewählt sind aus: PA6-Fasern, PA66-Fasern und Kombinationen daraus und/oder die genannten synthetischen Fasern umfassen Polyesterfasern, ausgewählt aus: PET-Fasern, PBT-Fasern und Kombinationen daraus.

3. Verfahren nach Anspruch 1 oder 2 zur Behandlung eines dehnbaren Textilstoffs, wobei der Textilstoff Folgendes umfasst:
- mindestens ein Garn, das die genannten synthetischen Fasern enthält, wobei das Garn mit mindestens einem elastischen Garn, das die genannten elastomeren Fasern enthält, verwoben ist; oder
- mindestens ein elastisches Garn, wobei die synthetischen Fasern und die elastomeren Fasern miteinander kombiniert sind, um das elastische Garn zu bilden.

4. Verfahren nach einem der Ansprüche 1 bis 3, wobei das Lösungsmittel eine wässrige Lösung von Caprolactam umfasst, vorzugsweise eine wässrige Lösung von Roh-Caprolactam mit einer Reinheit im Bereich von 94 bis 97 Gew.-%.

5. Verfahren nach Anspruch 4, wobei die wässrige Caprolactam-Lösung Caprolactam in einer Menge enthält, die mindestens 60 Gew.-%, bezogen auf das Gewicht der Lösung, beträgt, vorzugsweise mindestens 70 Gew.-% und noch bevorzugter mindestens 75 Gew.-%.

6. Verfahren nach einem der Ansprüche 1 bis 5, wobei der Schritt i. wird bei einer Temperatur im Bereich von 80-175 °C, vorzugsweise 85-150 °C, noch bevorzugter 100-130 °C und am meisten bevorzugt 110-125 °C durchgeführt.

7. Verfahren nach einem der Ansprüche 1 bis 6, wobei in Schritt i das Verhältnis des Gewichts des Lösungsmittels zum Gesamtgewicht des Garns oder des behandelten Textils im Bereich von 50:1 zu 6:1, vorzugsweise im Bereich von 25:1 bis 8:1.

8. Verfahren nach einem der Ansprüche 1 bis 7, wobei:
- wobei das Lösungsmittel eine wässrige Lösung von Caprolactam umfasst;
- wobei der Schritt i. bei einer Temperatur im Bereich von 100-130°C, vorzugsweise 110-125°C, durchgeführt wird;
- Die Dauer des genannten Schritts i. liegt im Bereich von 45 Minuten bis 110 Minuten, vorzugsweise von 60 Minuten bis 100 Minuten.

9. Verfahren nach einem der Ansprüche 1 bis 8, wobei der Koagulationsschritt iii das Abkühlen der aus dem Schritt ii austretenden flüssigen Phase (a) umfasst, vorzugsweise auf eine Temperatur im Bereich von 20-50°C.

10. Verfahren nach einem der Ansprüche 1 bis 9, umfassend das Umsetzen des koagulierten elastomeren Polymers mit einem Glykol, um ein Polyol zu erhalten, wobei das Glykol vorzugsweise ausgewählt ist aus: Ethylenglykol, Dipropylenglykol und Mischungen davon.

11. Verfahren nach einem der Ansprüche 1 bis 10, wobei die synthetischen Fasern aus Schritt ii. einem chemischen Recyclingverfahren zugeführt werden.

12. Verfahren nach Anspruch 11, wobei die synthetischen Fasern PA6-Fasern umfassen und das chemische Recyclingverfahren die Depolymerisation des PA6 zur Gewinnung von Epsilon-Caprolactam umfasst, oder wobei die synthetischen Fasern PET und/oder PBT Fasern umfassen und das chemische Recyclingverfahren die Depolymerisation des PET und/oder PBT durch Glykolyse umfasst.

13. Verfahren zur Rückgewinnung von Caprolactam aus einem Garn oder einem Textil, das Polyamidfasern in Kombination mit Elastomerfasern enthält, wobei dieses Verfahren die folgenden Schritte umfasst:
A1. Das Garn oder Textil mit einem Caprolactam enthaltenden Lösungsmittel in Kontakt bringen, um ein Zweiphasensystem zu erhalten, das Folgendes umfasst:
(a) eine flüssige Phase, die ein in dem genannten Lösungsmittel gelöstes elastomeres Polymer enthält,
(b) eine feste Phase, die die genannten Polyamidfasern umfasst;
A2. Abtrennung der festen Phase (b) von der flüssigen Phase (a) zur Gewinnung der genannten Polyamidfasern;
A3. Aushärten des elastomeren Polymers in der flüssigen Phase (a) nach Schritt A2;
A4. Abtrennen des ausgehärteten elastomeren Polymers von der flüssigen Phase (a), die das genannte Lösungsmittel enthält;
B. die in Schritt A2 gewonnenen Polyamidfasern einer hydrolytischen Depolymerisationsreaktion unterziehen, um eine wässrige Caprolactam-Lösung zu erhalten;
C. Zuführen einer ersten Aliquote der genannten wässrigen Caprolactam-Lösung zu einem Reinigungssystem, um gereinigtes Caprolactam zu erhalten;
wobei in dem genannten Schritt A1 das Lösungsmittel mindestens eine zweite Aliquote der in dem genannten Schritt B erhaltenen wässrigen Caprolactam-Lösung umfasst, wobei die elastomeren Fasern Fasern aus einem aromatischen elastomeren thermoplastischen Polyurethan umfassen, das das Reaktionsprodukt von Komponenten umfasst, die mindestens ein Polyol und mindestens ein aromatisches Polyisocyanat umfassen.

14. Verfahren nach Anspruch 13, wobei in dem Schritt A1 das Lösungsmittel zumindest einen Teil der flüssigen Phase (a) umfasst, die das in dem Schritt A4 erhaltene Lösungsmittel enthält.

15. Verfahren nach Anspruch 13 oder 14, wobei in dem genannten Schritt A1 das Lösungsmittel eine wässrige Lösung von Caprolactam umfasst, wobei das Caprolactam in einer Menge von mindestens 60 Gew.-%, bezogen auf das Gewicht der Lösung, vorzugsweise von mindestens 70 Gew.-% und noch bevorzugter von mindestens 75 Gew.-%, vorliegt.

## Revendications

1. Procédé de traitement d'un fil ou d'un textile, comprenant:
- des fibres synthétiques choisies parmi: les fibres de polyamide, les fibres de polyester et leurs combinaisons;
- fibres élastomères;
où ledit procédé comprend les étapes suivantes:
i. mettre le fil ou le textile en contact avec un solvant contenant du caprolactame afin d'obtenir un système biphasique comprenant:
(a) une phase liquide comprenant un polymère élastomère dissous dans ledit solvant,
(b) une phase solide comprenant lesdites fibres synthétiques;
ii. séparer la phase solide (b) de la phase liquide (a) afin de récupérer lesdites fibres synthétiques;
iii. coagulation du polymère élastomère en phase liquide (a) à la sortie de l'étape ii;
iv. séparer le polymère élastomère coagulé de la phase liquide (a),
dans lequel lesdites fibres élastomères comprennent des fibres d'un polyuréthane thermoplastique élastomère aromatique qui comprend le produit de réaction de composants comprenant au moins un polyol et au moins un polyisocyanate aromatique.

2. Procédé selon la revendication 1, dans lequel lesdites fibres synthétiques comprennent des fibres de polyamide choisies parmi: des fibres de PA6, des fibres de PA66 et leurs combinaisons, et/ou lesdites fibres synthétiques comprennent des fibres de polyester choisies parmi: Fibres de PET, fibres de PBT et leurs combinaisons.

3. Procédé selon la revendication 1 ou 2 destiné au traitement d'un textile extensible, ledit textile comprenant:
- au moins un fil composé desdites fibres synthétiques, ledit fil étant entrelacé avec au moins un fil élastique composé desdites fibres élastomères; ou
- au moins un fil élastique dans lequel lesdites fibres synthétiques et lesdites fibres élastomères sont associées les unes aux autres pour former ledit fil élastique.

4. Procédé selon l'une quelconque des revendications 1 à 3, dans lequel ledit solvant comprend une solution aqueuse de caprolactame, de préférence une solution aqueuse de caprolactame brut présentant une pureté comprise entre 94 % et 97 % en poids.

5. Procédé selon la revendication 4, dans lequel ladite solution aqueuse de caprolactame contient du caprolactame en une quantité égale ou supérieure à 60% en poids par rapport au poids de la solution, de préférence égale ou supérieure à 70% en poids, et de manière encore plus préférée égale ou supérieure à 75% en poids.

6. Procédé selon l'une quelconque des revendications 1 à 5, dans lequel l'étape i. est réalisée à une température comprise entre 80 et 175 °C, de préférence entre 85 et 150 °C, plus préférablement entre 100 et 130 °C, et encore plus préférablement entre 110 et 125 °C.

7. Procédé selon l'une quelconque des revendications 1 à 6, dans lequel, à l'étape i, le rapport entre le poids dudit solvant et le poids total dudit fil ou dudit textile traité se situe dans la plage allant de 50:1 à 6:1, de préférence compris entre 25:1 et 8:1.

8. Procédé selon l'une quelconque des revendications 1 à 7, dans lequel:
- ledit solvant comprend une solution aqueuse de caprolactame;
- ladite étape i. est réalisée à une température comprise entre 100 et 130 °C, de préférence entre 110 et 125 °C;
- la durée de ladite étape i. est comprise entre 45 minutes et 110 minutes, de préférence entre 60 minutes et 100 minutes.

9. Procédé selon l'une quelconque des revendications 1 à 8, dans lequel ladite étape de coagulation iii consiste à refroidir ladite phase liquide (a) issue de ladite étape ii, de préférence à une température comprise entre 20 et 50 °C.

10. Procédé selon l'une quelconque des revendications 1 à 9, comprenant la mise en réaction du polymère élastomère coagulé avec un glycol pour obtenir un polyol, ledit glycol étant de préférence choisi parmi: l'éthylène glycol, le dipropylène glycol et leurs mélanges.

11. Procédé selon l'une quelconque des revendications 1 à 10, comprenant l'introduction desdites fibres synthétiques issues de l'étape ii. dans un procédé de recyclage chimique.

12. Procédé selon la revendication 11, dans lequel lesdites fibres synthétiques comprennent des fibres de PA6 et ledit procédé de recyclage chimique comprend la dépolymérisation dudit PA6 pour obtenir de l'epsilon-caprolactame, ou dans lequel lesdites fibres synthétiques comprennent des fibres de PET et/ou de PBT et ledit procédé de recyclage chimique comprend la dépolymérisation dudit PET et/ou dudit PBT par glycolyse.

13. Procédé de récupération de caprolactame à partir d'un fil ou d'un textile comprenant des fibres de polyamide associées à des fibres élastomères, ce procédé comprenant les étapes suivantes:
A1. mettre le fil ou le textile en contact avec un solvant contenant du caprolactame afin d'obtenir un système biphasique comprenant:
(a) une phase liquide comprenant un polymère élastomère dissous dans ledit solvant,
(b) une phase solide comprenant lesdites fibres de polyamide;
A2. séparer la phase solide (b) de la phase liquide (a) afin de récupérer lesdites fibres de polyamide;
A3. coagulation du polymère élastomère en phase liquide (a) issue de l'étape A2;
A4. séparer le polymère élastomère coagulé de la phase liquide (a) comprenant ledit solvant;
B. soumettre lesdites fibres de polyamide récupérées à l'étape A2 à une réaction de dépolymérisation hydrolytique du polyamide afin d'obtenir une solution aqueuse de caprolactame;
C. introduire une première aliquote de ladite solution aqueuse de caprolactame dans un système de purification afin d'obtenir du caprolactame purifié;
dans laquelle, au cours de ladite étape A1, ledit solvant comprend au moins une deuxième aliquote de ladite solution aqueuse de caprolactame obtenue au cours de ladite étape B, lesdites fibres élastomères comprenant des fibres d'un polyuréthane thermoplastique élastomère aromatique qui comprend le produit de réaction de composants comprenant au moins un polyol et au moins un polyisocyanate aromatique.

14. Procédé selon la revendication 13, **caractérisé en ce que**, dans ladite étape A1, ledit solvant comprend au moins une partie de ladite phase liquide (a) comprenant ledit solvant obtenu lors de ladite étape A4.

15. Procédé selon la revendication 13 ou 14, **caractérisé en ce que**, dans ladite étape A1, ledit solvant comprend une solution aqueuse de caprolactame, ledit caprolactame étant présent en une quantité égale ou supérieure à 60% en poids par rapport au poids de la solution, de préférence égale ou supérieure à 70% en poids, et de manière encore plus préférée égale ou supérieure à 75% en poids.
